# EUROPEAN PATENT APPLICATION

(11) **EP 4 624 856 A1**
(43) Date of publication of application: **01.10.2025**
(21) Application number: 23894339.3
(22) Date of filing: 25.10.2023
(51) Int. Cl.: F28D 17/02, B01D 53/26, F24F 3/147

(54) **TOTAL HEAT EXCHANGER AND VENTILATOR**

(30) Priority: 22.11.2022 JP 2022186259
(71) Applicant: Sharp Kabushiki Kaisha, Sakai City, Osaka 590-8522 (JP)
(72) Inventor: IDE Tetsuya, Sakai City, Osaka 590-8522 (JP); AOMORI Shigeru, Sakai City, Osaka 590-8522 (JP); KANNO Toru, Sakai City, Osaka 590-8522 (JP); HAMADA Hiroka, Sakai City, Osaka 590-8522 (JP); KAMADA Tsuyoshi, Sakai City, Osaka 590-8522 (JP)
(74) Representative: Müller Hoffmann & Partner
(86) International application number: PCT/JP2023/038411
(87) International publication number: WO 2024/111327

(57) **Abstract**

The disclosure provides a total heat exchanger and a ventilation device that have a humidity control function, reduce thermal resistance to enable efficient heat exchange. The total heat exchanger of the disclosure includes a heat exchange element having a three-dimensional shape, a humidity control material provided on the heat exchange element, and a cylindrical heat storage unit so as to communicate one side and another side of the heat exchange element in an air flow direction.

## Description

### Technical Field

The disclosure relates to a total heat exchanger and a ventilation device. This application claims the benefit of priority to Japanese Patent Application Number 2022-186259 filed in Japan on November 22, 2022. The entire contents of the aboveidentified application are hereby incorporated by reference.

### Background Art

Various total heat exchangers have been disclosed in the prior art.

For example, PTL 1 discloses a desiccant rotor including a rotor body (11) having a hollow interior, a partition plate (12) for dividing the interior of the rotor body (11) into at least two parts, and at least two highly hygroscopic fibers (13) filled in spaces inside the rotor body (11) divided by the partition plate (12), respectively.

### Citation List

### Patent Literature

PTL 1: JP 2005-052694 A

### Summary of Invention

### Technical Problem

However, the above desiccant rotor is designed to be lighter than the conventional rotors. Since the interior thereof is filled with highly hygroscopic fibers, thermal resistance becomes extremely large, heat of adsorption cannot be dissipated, and hygroscopic performance is reduced, so that this desiccant rotor cannot be used in a total heat exchanger.

**In** view of the above problems, the disclosure provides a total heat exchanger and a ventilation device that have a humidity control function, reduce thermal resistance to enable efficient heat exchange.

### Solution to Problem

According to an aspect of the disclosure, a total heat exchanger includes a heat exchange element having a three-dimensional shape, a humidity control material provided on the heat exchange element, and a heat storage unit having a cylindrical shape configured to communicate one side and another side of the heat exchange element in an air flow direction.

According to another aspect of the disclosure, a ventilation device includes the above total heat exchanger and a space provided with the total heat exchanger.

### Advantageous Effects of Invention

As described above, according to the disclosure, it is possible to provide a total heat exchanger and a ventilation device that have a humidity control function, reduce thermal resistance to enable efficient heat exchange.

### Brief Description of Drawings

FIG. 1 is a perspective view schematically illustrating a total heat exchanger according to the disclosure.
FIG. 2 is a front view schematically illustrating the total heat exchanger according to the disclosure.
FIG. 3 is a side view schematically illustrating the total heat exchanger according to the disclosure.
FIG. 4 is a perspective view schematically illustrating a heat storage unit provided in a heat exchange element.
FIG. 5 is a perspective view schematically illustrating the heat storage unit including a filter at an inlet or an outlet.
FIG. 6 is a perspective view schematically illustrating a modified example of the heat storage unit provided in the heat exchange element.
FIG. 7 is a perspective view schematically illustrating another modified example of the heat storage unit provided in the heat exchange element.
FIG. 8 is a perspective view schematically illustrating still another modified example of the heat storage unit provided in the heat exchange element.
FIG. 9 is a perspective view schematically illustrating yet another modified example of the heat storage unit provided in the heat exchange element.
FIG. 10 is a perspective view schematically illustrating a further modified example of the heat storage unit provided in the heat exchange element.
FIG. 11 is a cross-sectional view schematically illustrating a humidity control material.
FIG. 12 is a diagram schematically illustrating the humidity control material.
FIG. 13 is a cross-sectional view of a sheet in which the humidity control material is dispersed in a binder.
FIG. 14 is a cross-sectional view schematically illustrating the humidity control material.
FIG. 15 is a perspective view schematically illustrating heat recovery units.
FIG. 16 is a perspective view schematically illustrating the total heat exchanger further including the heat recovery units.
FIG. 17 is a perspective view schematically illustrating the total heat exchanger including the heat exchange element, which is a block type.
FIG. 18 is a perspective view schematically illustrating the total heat exchanger in which the heat exchange element includes thick liner sections.
FIG. 19 is a perspective view schematically illustrating the total heat exchanger in which the heat exchange element includes partition plates.
FIG. 20 is a side view schematically illustrating the total heat exchanger further including a first fan.
FIG. 21 is a side view schematically illustrating the total heat exchanger including the first fan and further a second fan.
FIG. 22 is a side view schematically illustrating the total heat exchanger in which a sensible heat unit is provided on the heat exchange element.
FIG. 23 is a side view schematically illustrating the total heat exchanger in which the sensible heat unit has a tapered portion.
FIG. 24 is a perspective view illustrating a modified example of the heat exchange element.
FIG. 25 is a front view illustrating the modified example of the heat exchange element.
FIG. 26 is a perspective view illustrating another modified example of the heat exchange element.
FIG. 27 is a front view illustrating the other modified example of the heat exchange element.
FIG. 28 is a side view schematically illustrating a ventilation device according to the disclosure.
FIG. 29 is a side view schematically illustrating a modified example of the ventilation device according to the disclosure.

### Description of Embodiments

Preferred embodiments of the disclosure will be described in detail below with reference to the drawings. Note that the embodiments described below do not unduly limit the content of the disclosure described in the claims, and not all of the configurations described in the embodiments are necessarily essential as means for solving the problems in the disclosure. In the drawings, an X axis is a depth direction, which corresponds to an air flow direction, a Y axis is a width direction, and a Z axis is a height direction.

### Total Heat Exchanger

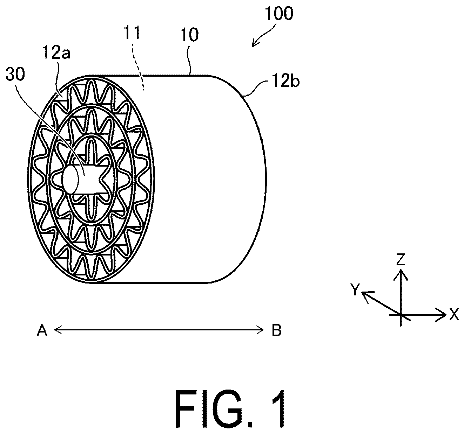

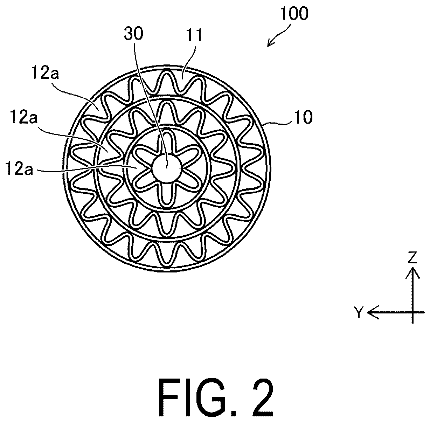

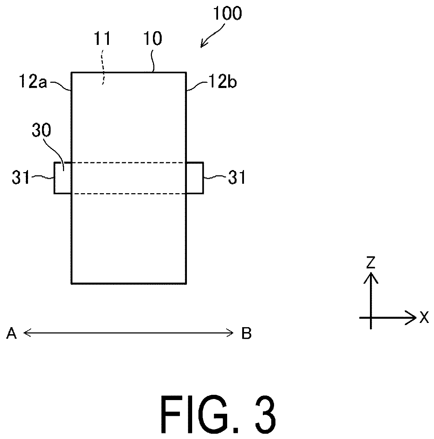

FIG. 1 is a perspective view schematically illustrating a total heat exchanger 100 according to the disclosure. FIG. 2 is a front view schematically illustrating the total heat exchanger 100 according to the disclosure. FIG. 3 is a side view schematically illustrating the total heat exchanger 100 according to the disclosure. As illustrated in FIGS. 1, 2, and 3, the total heat exchanger 100 according to the disclosure includes a heat exchange element 10, a humidity control material, and a heat storage unit 30. Note that the humidity control material is a thin film or the like and is not indicated by a reference numeral in FIGS. 1, 2 and 3. Details thereof will be described later.

As illustrated in FIG. 1 and the like, the heat exchange element 10 has a three-dimensional shape such as a corrugated shape. By having a three-dimensional shape such as a corrugated shape, the heat exchange element 10 has a large surface area per volume, making it possible to provide a large heat absorption/desorption and moisture absorption/desorption area. Three-dimensional shapes include a corrugated shape and a honeycomb shape. The honeycomb shape is a shape in which regular hexagonal prisms or three-dimensional figures are arranged without gaps (three-dimensional space filling).

The heat exchange element 10 has an air passage 11 so that air can pass from A to B or from B to A. The three-dimensional heat exchange element 10 regulates moisture content of the humidity control material that absorbs or desorbs moisture by exchanging heat such as by dissipating heat. Note that the heat exchange element 10 illustrated in FIG. 1 is cylindrical.

The heat exchange element 10 is provided with the humidity control material. The humidity control material has a humidity control function of absorbing or desorbing moisture. To prepare the humidity control material, a water absorbent resin is added to a humidity control liquid described below, and the mixture is stirred to cause swelling, thereby preparing a viscous slurry of the humidity control material in advance. The slurry is then applied so as to impregnate the heat exchange element 10, and then dried and fixed. In this manner, by applying the slurry so as to impregnate part or the whole of the heat exchange element 10, the humidity control material having a desired area can be obtained.

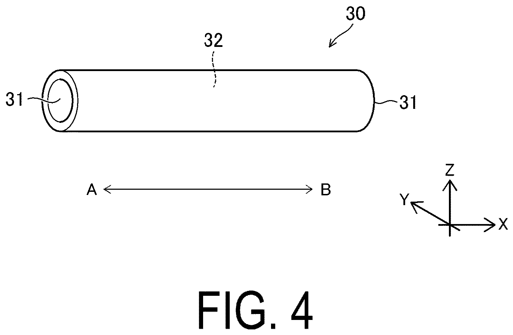

As illustrated in FIGS. 1, 2, and 3, the heat storage unit 30 is provided so as to communicate one side A and another side B of the heat exchange element 10 in the air flow direction. As illustrated in FIG. 4, the heat storage unit 30 is cylindrical so that air can flow through the heat storage unit 30, and has a ventilation air passage 32 with a smaller pressure loss than in the heat exchange element 10. The heat storage unit 30 may be rod-shaped without having the ventilation air passage 32. Heat exchange also occurs in the ventilation air passage 32. Since the heat exchange element 10 is three-dimensional, heat tends to accumulate inside. Therefore, the heat storage unit 30 is provided inside the heat exchange element 10. The heat storage unit 30 is preferably provided at the axis center of the heat exchange element 10. That is, the heat storage unit 30 is preferably provided so as to pass through the center of the heat exchange element 10 in an air flow plane (YZ plane). A single or multiple heat storage units 30 may be provided.

**In** the total heat exchanger 100 according to the disclosure, the humidity control material absorbs moisture from high-humidity and high-temperature air in the air, and heat of adsorption and heat of desorption during the moisture absorption are released and heat-exchanged by the heat exchange element 10 having a three-dimensional shape and the heat storage unit 30.

The heat exchange element 10 having a three-dimensional shape has a large surface area per volume, making it possible to provide a large heat absorption/desorption and moisture absorption/desorption area. However, on the other hand, since the heat exchange element 10 has large porosity, heat capacity as a structure is extremely small, and temperature rise when the heat of adsorption generated during moisture absorption by the humidity control material is stored becomes large, which causes relative humidity to increase and reduces performance of the humidity control material. Therefore, by providing the heat storage unit 30, the heat absorbed by the humidity control material can be efficiently desorbed. Thus, the total heat exchanger 100 according to the disclosure has a humidity control function and can reduce thermal resistance to enable efficient heat exchange. **In** addition, by efficiently desorbing the heat absorbed by the humidity control material, dripping due to carryover of the humidity control material can be suppressed.

The heat exchange element 10 and the heat storage unit 30 are preferably made of a metal having high thermal conductivity, such as aluminum, iron, or copper, so as to facilitate heat exchange. The heat exchange element 10 and the heat storage unit 30 may be made of the same material or different materials.

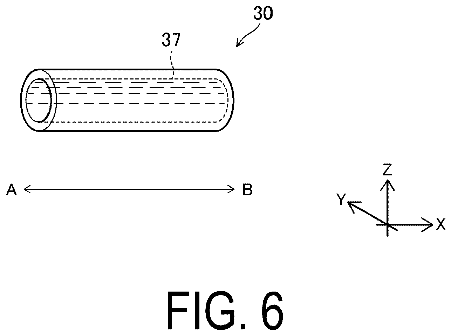

As illustrated in FIG. 6, the heat storage unit 30 may include water 37. **In** this way, the total heat exchanger 100 can be made lighter. The water 37 is filled inside the heat storage unit 30.

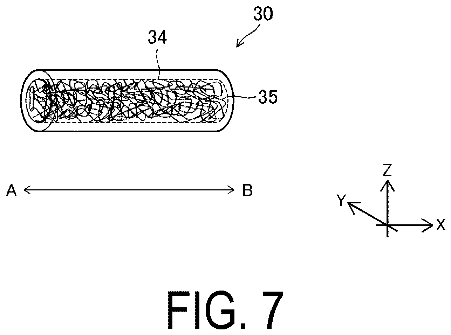

As illustrated in FIG. 7, the heat storage unit 30 may include gelled water 34 and highly thermally conductive fibers 35, which are a highly thermally conductive material. The highly thermally conductive fibers 35 are retained by being added to the gelled water 34. In this way, heat can be exchanged efficiently and the total heat exchanger 100 can be made lighter. The highly thermally conductive fibers 35 are made of metal or carbon. Note that the heat storage unit 30 illustrated in FIG. 7 is rod-shaped. In FIG. 7, the gelled water 34 is not illustrated for convenience.

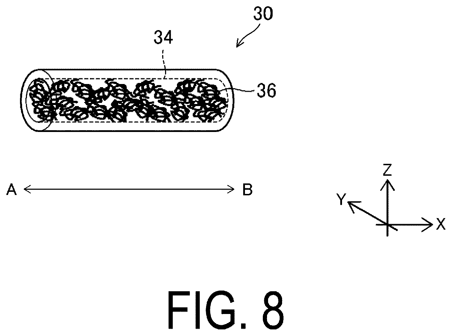

As illustrated in FIG. 8, the heat storage unit 30 may include the gelled water 34 and a highly thermally conductive random packing 36, which is a highly thermally conductive material. The highly thermally conductive random packing 36 is retained by being added to the gelled water 34. The highly thermally conductive random packing 36 is made of metal and is a metal disordered filling. The highly thermally conductive random packing 36 is used to increase a contact area with the gelled water 34. Simply increasing an amount of the highly thermally conductive random packing 36 may make it difficult for the liquid to flow, which may result in reduced thermal conductivity. However, by using the heat storage unit 30 as a container and the gelled water 34, the heat storage unit 30 can have suitable thermal conductivity. In this way, heat can be exchanged efficiently and the total heat exchanger 100 can be made lighter. Note that the heat storage unit 30 illustrated in FIG. 8 is rod-shaped. In FIG. 8, the gelled water 34 is not illustrated for convenience.

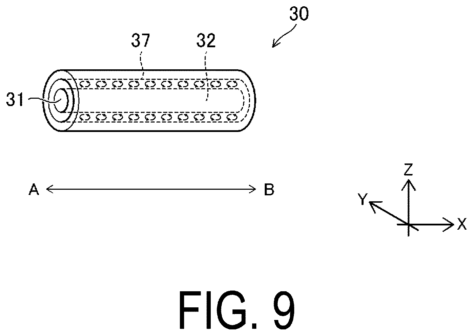

As illustrated in FIG. 9, convection-controlled water 37 may be included in the heat storage unit 30 outside the ventilation air passage 32. Convection of the water 37 is controlled by a space between walls. Convection does not occur when a distance between an outer wall of the ventilation air passage 32 and an inner wall of a tube filled with the water 37 is small (the upper limit of the distance at which convection does not occur is determined by viscosity or the like of the liquid). On the other hand, as the distance between the outer wall of the ventilation air passage 32 and the inner wall of the tube filled with the water 37 increases, convection occurs in divided areas, and as the distance increases further, convection occurs through the entire liquid. By controlling the convection in this manner, the water 37 is circulated by convection, so that heat can be exchanged efficiently and the total heat exchanger 100 can be made lighter. This convection-controlled structure can further improve a heat transfer rate compared to a structure using only heat conduction or a structure using overall convection, by setting the distance between the outer wall of the ventilation air passage 32 and the inner wall of the tube filled with the water 37 so that convection occurs in the divided areas. Note that the heat storage unit 30 illustrated in FIG. 9 is cylindrical. **In** FIG. 9, the convection-controlled water 37 is not illustrated for convenience.

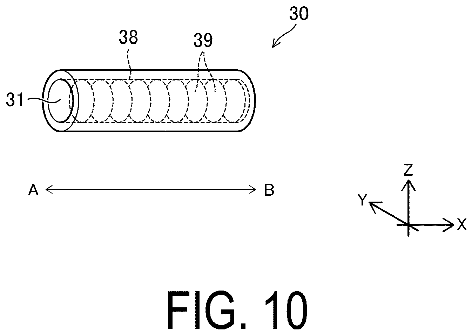

As illustrated in FIG. 10, the heat storage unit 30 may include a water-filled corrosion-resistant aluminum container 38, and the water-filled corrosion-resistant aluminum container 38 may include corrosion-resistant aluminum members 39 made of a highly thermally conductive material. The heat storage unit 30 illustrated in FIG. 10 is rod-shaped. In this way, heat can be exchanged efficiently and the total heat exchanger 100 can be made lighter. Note that in FIG. 10, water is not illustrated for convenience.

A material of the corrosion-resistant aluminum member 39 is not limited to aluminum, but may be any material having high thermal conductivity that does not corrode in water, such as copper, stainless steel, silver, or gold.

A shape of the corrosion-resistant aluminum member 39 may be, for example, disk-shaped, spherical, cubic, rectangular parallelepiped, or the like. The shape of the corrosion-resistant aluminum member 39 is not limited to a disc shape or the like, as long as a heat conduction path is provided between the corrosion-resistant aluminum member 39 and the water-filled corrosion-resistant aluminum container 38, and the corrosion-resistant aluminum member 39 has some contact area for heat conduction with the water in the water-filled corrosion-resistant aluminum container 38.

Table 1 shows volumetric specific heat, thermal conductivity, temperature conductivity, and weight for an embodiment in which the heat storage unit 30 is made of stainless steel (SUS304) and an embodiment illustrated in FIG. 10. Dimensions of the heat storage unit 30 were φ54 mm × 100 mm. A thickness of the water-filled corrosion-resistant aluminum container 38 was 1 mm, and an occupancy rate of water in the heat storage unit 30 was 7%. The corrosion-resistant aluminum container was sealed or closed with a cap with a gasket. The corrosion-resistant aluminum members 39 were placed in the water-filled corrosion-resistant aluminum container 38 having an occupancy rate of 10% relative to the heat storage unit 30.

**[Table 1]**

| | SUS304 | Water + aluminum |
|---|---|---|
| Volumetric specific heat [kJ/(m³·K)] | 3952 | 3860 |
| Thermal conductivity [W/(m·K)] | 16 | 13.2 (composite value) |
| Temperature conductivity [m²/h] | 0.0146 | 0.0123 (composite value) |
| Weight | 1.8 | 0.29 (16% of SUS304) |
| Remarks | - | It is assumed that water is solidified (heat transfer by convection is not considered) |

The thermal conductivity of the heat storage unit 30 including the water 37 and the like in the heat storage unit 30 will be described below. Table 1 shows thermal conductivities of the embodiment in which the heat storage unit 30 is made of stainless steel (SUS304) and the embodiment illustrated in FIG. 10. As shown in Table 1, the embodiment illustrated in FIG. 10 had a larger volumetric specific heat and a smaller thermal conductivity than the embodiment in which the heat storage unit 30 is made of stainless steel (SUS304). The embodiment illustrated in FIG. 10 had a smaller temperature conductivity and a smaller weight than the embodiment in which the heat storage unit 30 is made of stainless steel (SUS304). Therefore, the embodiment illustrated in FIG. 10 can exchange heat more efficiently and make the total heat exchanger lighter than the embodiment in which the heat storage unit 30 is made of stainless steel (SUS304).

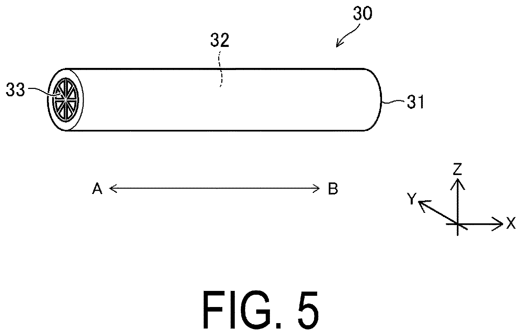

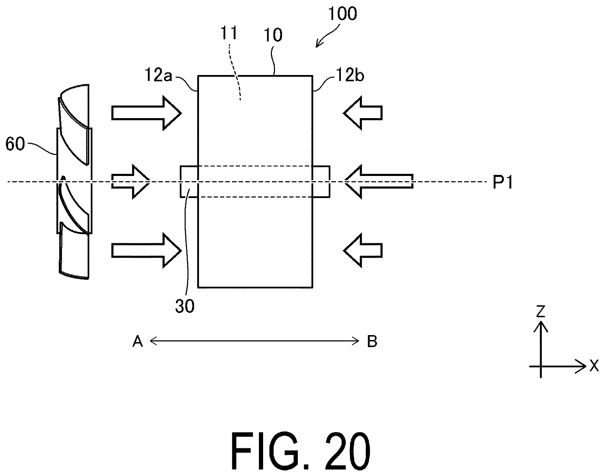

The heat storage unit 30 may include a filter 33 in order to regulate an amount of air flowing from A to B or from B to A in the ventilation air passage 32. For example, when the amount of air flowing from A to B is greater than the amount of air flowing from B to A near an opening 31 of the heat storage unit 30, in order to prevent variation in the amount of heat exchange in the heat storage unit 30 in the X direction, the filter 33 is provided on the A side as illustrated in FIG. 5 to regulate the amount of air entering from the A side and the amount of air entering from the B side. Note that when the amount of air from B to A is greater than the amount of air from A to B, the filter 33 is provided on the B side. That is, the filter 33 is provided near the opening 31 of the heat storage unit 30 on the side where the amount of air is large. This will be described later with reference to FIG. 20. Note that the filter 33 is not limited to the filter 33 as long as the filter 33 regulates the amount of air entering the ventilation air passage 32 from the opening 31 of the heat storage unit 30.

Next, the humidity control material provided on the heat exchange element 10 will be described.

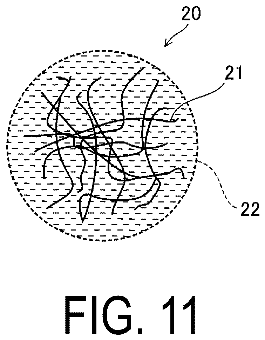

FIG. 11 is a cross-sectional view schematically illustrating a humidity control material 20. As illustrated in FIG. 11, the humidity control material 20 includes a water absorbent material 21 including a resin and/or a clay mineral, and a humidity control liquid 22, which is a humidity control component having a humidity control function of absorbing or desorbing moisture. The water absorbent material 21 is impregnated with the humidity control liquid 22. Depending on the humidity of the environment where the humidity control material 20 is placed, the humidity control material 20 absorbs moisture contained in the air at that location or desorbs moisture contained in the humidity control material 20 into the air to humidify the air. Note that not only the water absorbent material 21 but also a support 23 that supports the humidity control material 20 (water absorbent material 21) may be impregnated with the humidity control liquid 22. The support 23 will be described later.

The humidity control material 20 may be in powder, particle, or block form, and may be used in the form of a resin supported on a permeable substrate so as to be efficiently in contact with air.

The water absorbent material 21 has a function of retaining the humidity control liquid 22. Since the water absorbent material 21 retains the humidity control liquid 22, the humidity control material 20 can have a high ratio of surface area to volume. Thus, the rate of moisture absorption or desorption can be increased. Therefore, the humidity control material 20 can have a high humidity control rate.

The water absorbent material 21 is preferably a water absorbent resin (particles, powder). This allows the water absorbent material 21 to be suitably impregnated with the humidity control liquid 22, further enhancing humidity control effect. Specific preferable examples of water absorbent resin materials include ionic resins and nonionic resins. Examples of ionic resins include alkali metal salts of polyacrylic acid and starch-acrylate graft polymers. Specific examples of alkali metal salts of polyacrylic acid include sodium polyacrylate. Examples of nonionic resins include vinyl acetate copolymers, maleic anhydride copolymers, polyvinyl alcohol, and polyalkylene oxides. As a metal salt component, one that promotes rapid moisture absorption and desorption with a specific humidity range as a threshold by forming hydrate crystals in a predetermined humidity range is more preferable.

The humidity control liquid 22 preferably contains at least one selected from the group consisting of deliquescent substances that absorb moisture in the air and deliquesce, and polyhydric alcohols. This can further enhance humidity control effect.

Specific examples of polyhydric alcohols include at least one selected from the group consisting of glycerin, propanediol, butanediol, pentanediol, trimethylolpropane, butanetriol, ethylene glycol, diethylene glycol, triethylene glycol, and lactic acid. Among these, polyhydric alcohols having three or more hydroxyl groups such as glycerin are more preferably used. Note that the polyhydric alcohols may form dimers or polymers.

The deliquescent substances are classified into salts and water soluble organic substances. Specific examples of salts include sodium formate, potassium formate, ammonium formate, sodium acetate, potassium acetate, lithium acetate, ammonium acetate, sodium lactate, potassium lactate, sodium benzoate, potassium benzoate, sodium propionate, potassium propionate, calcium chloride, lithium chloride, magnesium chloride, calcium chloride, lithium chloride, potassium chloride, sodium chloride, zinc chloride, aluminum chloride, lithium bromide, calcium bromide, potassium bromide, sodium hydroxide, sodium pyrrolidone carboxylate, potassium carbonate, calcium citrate, sodium citrate, potassium citrate, and lithium citrate. The humidity control liquid 22 may contain only one of these salts, or two or more of them. Among these, sodium formate, potassium formate, sodium acetate, potassium acetate, and potassium carbonate are preferable because they absorb and desorb a large amount of moisture per weight. Specific examples of water soluble organic substances include sugars such as sucrose, pullulan, glucose, xylol, fructose, mannitol, and sorbitol; carboxylic acids such as citric acid; and amides such as urea.

An amount of the humidity control liquid 22 relative to the water absorbent material 21 is preferably 1 part by weight or more and 1000 parts by weight or less relative to 100 parts by weight of the water absorbent material. **In** this way, the amounts of the water absorbent material 21 and the humidity control liquid 22 become appropriate, and the humidity control function can be further enhanced. The water absorbent material 21 is preferably in a powder or particle form.

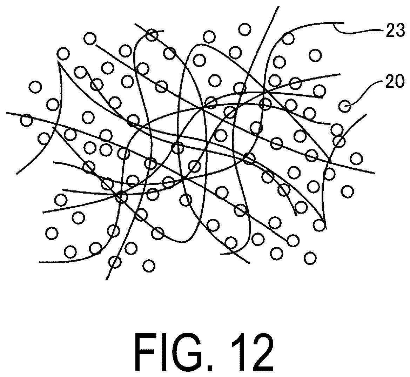

FIG. 12 is a diagram schematically illustrating the humidity control material 20. As illustrated in FIG. 12, the humidity control material 20 (water absorbent material 21) may be supported by the support 23. The support 23 may also be impregnated with moisture.

The total heat exchanger 100 according to the disclosure is formed by applying the humidity control material 20 to the heat exchange element 10 or immersing the heat exchange element 10 in a liquid containing the humidity control material 20, thereby attaching the humidity control material 20 to the heat exchange element 10.

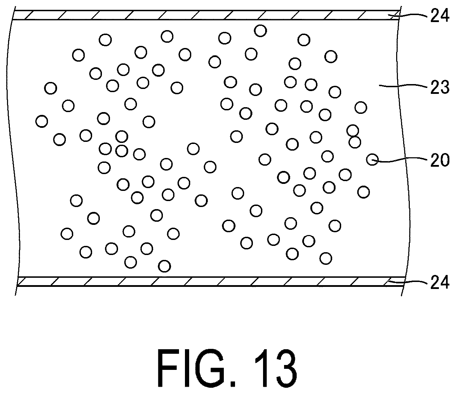

FIG. 13 is a diagram schematically illustrating another embodiment of the humidity control material 20, and is a cross-sectional view of a sheet in which a binder (support 23) is placed between water absorbers 24 and the humidity control material 20 is dispersed in the binder. As illustrated in FIG. 13, the humidity control material 20 (water absorbent material 21) may be supported by the support 23. The water absorber 24 may include the water absorbent material 21. The support 23 may also be impregnated with moisture. A material including the humidity control material 20 as illustrated in FIG. 13 may be provided on the heat exchange element 10.

It is preferable to select the most suitable support 23 for supporting the humidity control material 20 depending on the application. When used for the heat exchange element 10 involving heat transfer, the support 23 is preferably made of a metal material such as aluminum or ceramics, and when the purpose is humidity control and a large moisture absorption and desorption capacity is desired, a material that can be impregnated with and retain the humidity control liquid 22 is preferable. In the latter case, the support 23 is made of, for example, hydrophilic fibers such as a porous material, a nonwoven fabric, or a woven fabric. In particular, a nonwoven fabric having high water vapor permeability is preferable. The support 23 may also include a binder.

The support 23 is sheet-shaped, and may be used after being formed into any desired shape, such as a flat plate, a pleated shape, or a honeycomb shape. For example, a sheet of material may be formed into a corrugated (fluted) shape using a corrugator and then the sheet is bonded to a flat liner made of the same or a different material by an adhesive to form an integrated component. The support 23 may be flexible. The support 23 may be deformable. In other words, the support 23 may be held in any shape (e.g. bent or curved shape).

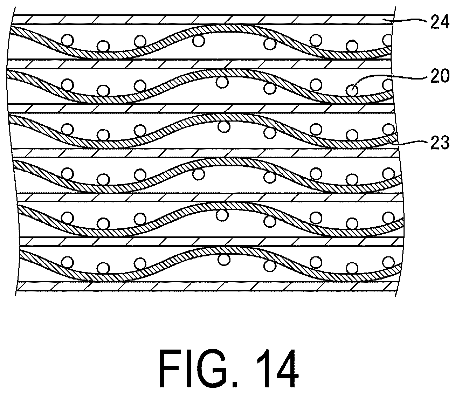

FIG. 14 is a cross-sectional view schematically illustrating the humidity control material 20. As illustrated in FIG. 14, the support 23 supporting the humidity control material 20 is held by the water absorber 24 and is provided on the heat exchange element 10. In this way, an area in contact with air is increased, improving the humidity control function.

The water absorber 24 may include the water absorbent material 21. The water absorber 24 may be in the form of a powder, granules, or a sheet.

In addition to the above, B-type silica gel, a polymer absorption material, and the like may be used as the humidity control material 20.

As the humidity control component, in addition to containing any of the above-mentioned metal salts, another component may be added as an additive to regulate crystallization threshold humidity. Examples thereof include other metal salts, polyhydric alcohols, and materials that act as nucleating materials for hydrate crystals. Specific examples of the generating materials include carboxylic acids having two or more carboxyl groups and amides having two or more amide groups. The above-mentioned substances may be used for the carboxylic acids. When the humidity is low, the humidity control material may crystallize, and the crystallization threshold humidity is a threshold of the humidity at which crystallization occurs.

Note that the term "humidity control" means regulating the relative humidity so as to approach a specified humidity range. To be specific, for example, when 50% RH is set as a specified relative humidity, the humidity control material 20 absorbs moisture when the relative humidity is higher than 50% RH, and the humidity control material 20 desorbs moisture when the relative humidity is lower than 50% RH. Typically, the specified relative humidity zone correlates with the material and the moisture content of the humidity control material 20. To be specific, for example, the specified relative humidity zone correlates with the moisture content in the humidity control liquid 22.

The total heat exchanger 100 according to the disclosure will be further described below.

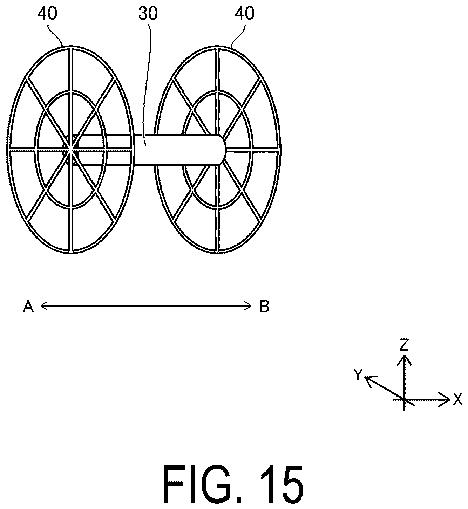

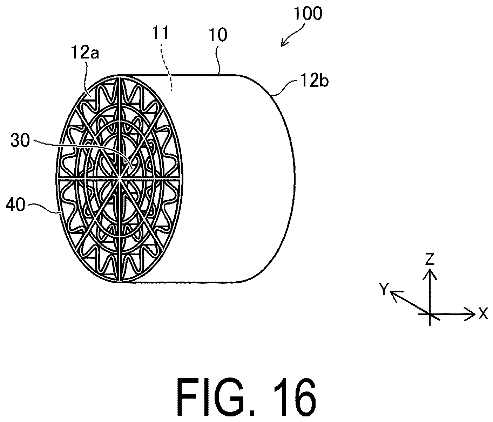

FIG. 15 is a perspective view schematically illustrating heat recovery units 40. FIG. 16 is a perspective view schematically illustrating the total heat exchanger 100 further including the heat recovery units 40. When the heat recovery units 40 illustrated in FIG. 15 are attached to the heat exchange element 10 illustrated in FIG. 1, the total heat exchanger 100 illustrated in FIG. 16 is obtained. The heat storage unit 30 illustrated in FIG. 16 does not protrude from a front surface of the heat exchange element 10, and the heat recovery units 40 are in contact with the heat exchange element 10. The heat recovery units 40 are provided on a first opening 12a side on the A side and/or on a second opening 12b side on the B side of the heat exchange element 10.

The heat recovery unit 40 recovers or releases heat, and is preferably made of a metal having high thermal conductivity, such as aluminum, iron, or copper.

The heat storage unit 30 and the heat recovery unit 40 may also be provided with the humidity control material 20. However, the heat storage unit 30 and the heat recovery unit 40 may be provided without the humidity control material 20 so as to exchange heat with the heat exchange element 10 and easily desorb heat.

A surface of the heat exchange element 10 is preferably treated to be hydrophilic. Since the slurry used to attach the humidity control material 20 is a watersolvent, by making the surface of the heat exchange element 10 be hydrophilic, the heat exchange element 10 and the humidity control material 20 can be attached and supported without the use of adhesive, thereby improving efficiency of heat transfer of heat of adsorption to the heat exchange element 10. **In** addition, production efficiency of the total heat exchanger 100 is improved. Examples of the hydrophilic treatment methods for the surface treatment of the heat exchange element 10 include a method of providing a silica-based coating film containing water glass or the like as a main component, a method of providing a resin-based coating film using a hydrophilic resin, and a method of providing a boehmite coating film or an anodized coating film. Further, it becomes easier to attach the humidity control material 20 to the heat exchange element 10.

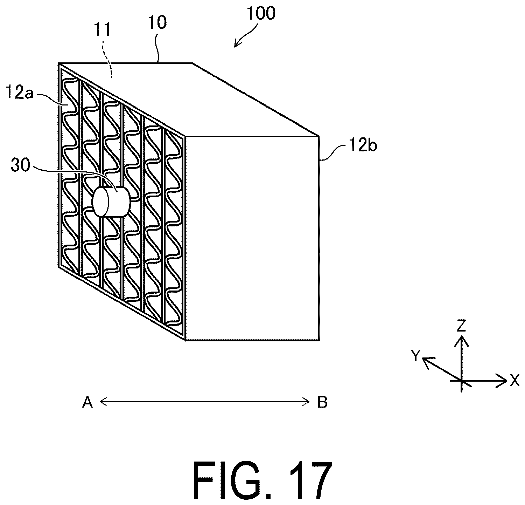

FIG. 17 is a perspective view schematically illustrating the total heat exchanger 100 including the heat exchange element 10, which is a block type. The heat exchange element 10 illustrated in FIGS. 1 and 16 is cylindrical, but may be a block type as illustrated in FIG. 17. **In** a cylindrical heat exchange element, the thermal resistance is equal in any direction in a circular plane, whereas in a block type heat exchange element, the thermal resistance varies depending on the direction in a square plane.

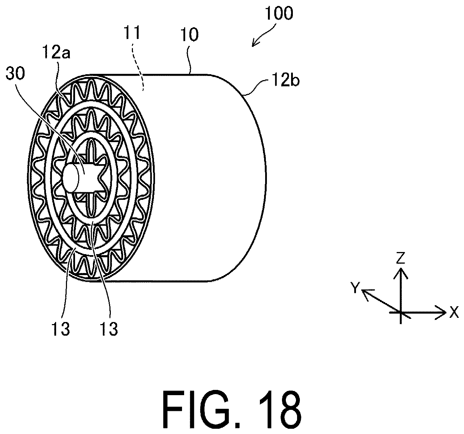

FIG. 18 is a perspective view schematically illustrating the total heat exchanger 100 in which the heat exchange element 10 includes thick liner sections 13. As illustrated in FIG. 18, the heat exchange element 10 may include the thick liner sections 13 provided circumferentially at predetermined distances around the axis of the heat exchange element 10. This increases an amount of the heat storage, improves thermal conductivity, reduces thermal resistance to enable efficient heat exchange.

The thick liner sections 13 are made of a material that is thicker than the base material of the heat exchange element 10. The thick liner sections 13 may be cylindrical and extend in the X direction in the heat exchange element 10 so as to surround the heat storage unit 30. The thick liner sections 13 can also be provided with or without the humidity control material 20. The thick liner sections 13 are preferably made of a metal having high thermal conductivity, such as aluminum, iron, or copper.

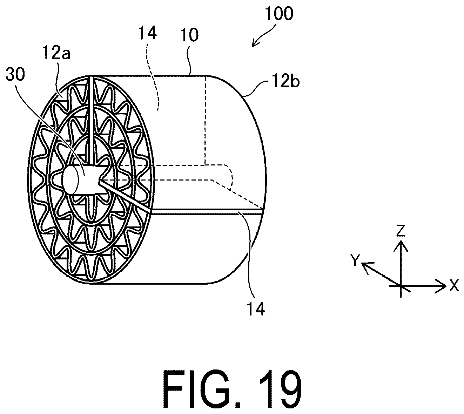

FIG. 19 is a perspective view schematically illustrating the total heat exchanger 100 in which the heat exchange element 10 includes partition plates 14. As illustrated in FIG. 19, the heat exchange element 10 may include the partition plates 14 extending outward from around the axis of the heat exchange element 10. The partition plates 14 may be provided so as to extend from the heat storage unit 30 towards the outside of the heat exchange element 10. This increases an amount of the heat storage, improves thermal conductivity, reduces thermal resistance to enable efficient heat exchange.

The partition plates 14 may be made of a material that is thicker than the base material of the heat exchange element 10. The partition plates 14 are preferably made of a metal having high thermal conductivity, such as aluminum, iron, or copper.

FIG. 20 is a side view schematically illustrating the total heat exchanger 100 further including a first fan 60. As illustrated in FIG. 20, on the one side A or the other side B of the heat exchange element 10, the first fan 60 for sending air to the heat exchange element 10 and the heat storage unit 30 may be further provided around the heat exchange element 10. The first fan 60 is provided, for example, on the side of the first opening 12a of the heat exchange element 10. Air enters through the first opening 12a, passes through the air passage 11, and exits through the second opening 12b. Air also passes through the heat storage unit 30 from the A side to the B side. In this way, the total heat exchanger 100 has a humidity control function and enables efficient heat exchange. In addition, the total heat exchanger 100 can prevent variation in the amount of air and enables efficient heat exchange.

An axis P1 of the first fan 60 is preferably parallel to the air passage 11 through which air flows in the heat exchange element 10. In other words, the air flow direction of the first fan 60 is parallel to the air passage 11. In addition, the center of the heat exchange element 10 is positioned on the axis P1 of the first fan 60.

The size of arrows in FIG. 20 indicates the size of the amount of air. As illustrated in FIG. 20, when the fan is provided near the heat exchange element 10 and air flows from A to B, the amount of air near the center of the heat exchange element 10 (near the axis P1 of the first fan 60) is smaller than that on the outside. On the other hand, when the first fan 60 is rotated in a reverse direction to cause air to flow from B to A, the amount of air near the center of the heat exchange element 10 (near the axis P1 of the first fan 60) is greater than that on the outside. In such a case, the heat storage unit 30 including the filter 33 illustrated in FIG. 5 is provided to suppress variation in the amount of air flowing through the heat exchange element 10. As illustrated in FIG. 20, when air flows from B to A and the amount of air near the center of the heat exchange element 10 (near the axis P1 of the first fan 60) is large, the filter 33 is provided at the opening 31 of the heat storage unit 30 on the B side to limit the amount of air near the center of the heat exchange element 10, thereby suppressing variation in the overall amount of air.

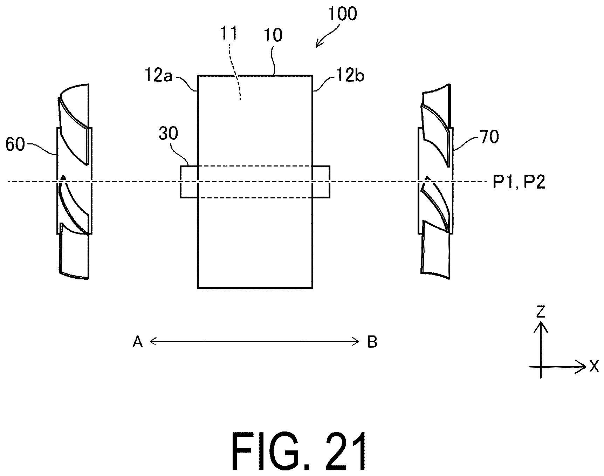

FIG. 21 is a side view schematically illustrating the total heat exchanger 100 including the first fan 60 and further a second fan 70. As illustrated in FIG. 21, the first fan 60 for sending air to the heat exchange element 10 and the heat storage unit 30 may be provided on the one side A or the other side B of the heat exchange element 10, and the second fan 70 for sending air to the heat exchange element 10 and the heat storage unit 30 may be further provided on the other side B or the one side A of the heat exchange element 10. The first fan 60 and the second fan 70 may be axial flow fans equipped with propellers or blower fans.

The axis P1 of the first fan 60 and an axis P2 of the second fan 70 are preferably parallel to the air passage 11 through which air flows in the heat exchange element 10. That is, the air flow directions of the first fan 60 and the second fan 70 are parallel to the air passage 16. The center of the heat exchange element 10 is positioned on the axis P1 of the first fan 60 and the axis P2 of the second fan 70.

The first fan 60 and the second fan 70 may have different rotation directions and fan angles but the same air flow direction. That is, the first fan 60 rotates clockwise and the second fan 70 rotates counterclockwise, and the fan angles of the first fan 60 and the second fan 70 are opposite, resulting in the same air flow direction. **In** this way, it is possible to further improve the variation in the amount of air between the center and the outside of the heat exchange element 10, which will be described later. **In** addition, condensation due to excessive moisture absorption by the humidity control material 20 can be further prevented.

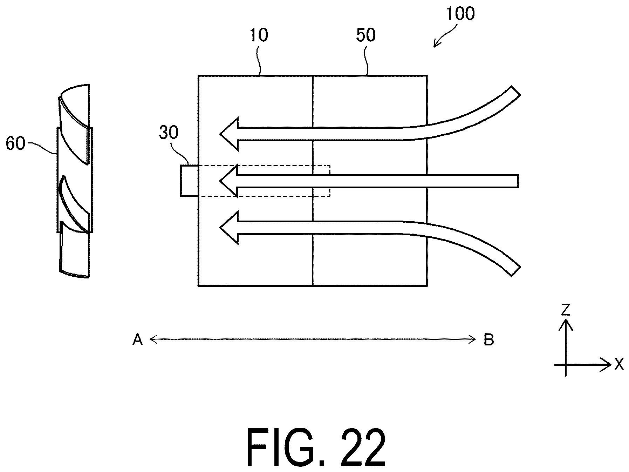

FIG. 22 is a side view schematically illustrating the total heat exchanger 100 in which a sensible heat unit 50 is provided on the heat exchange element 10. As illustrated in FIG. 22, the sensible heat unit 50 may be further provided on the one side A or the other side B of the heat exchange element 10. The sensible heat unit 50 releases heat from the heat exchange element 10 and the heat recovery units 40. **In** this way, heat exchange can be promoted and the heat capacity of the total heat exchanger 100 can be increased. The sensible heat unit 50 is preferably made of a metal having high thermal conductivity, such as aluminum, iron, or copper.

As illustrated in FIG. 22, when the first fan 60 is provided on the one side A of the heat exchange element 10, the sensible heat unit 50 is preferably provided on the other side B of the heat exchange element 10. **In** this way, the amount of air of the heat exchange element 10 on the outside can be increased, and the variation in the amount of air in the heat exchange element 10 described with reference to FIG. 20 can be reduced.

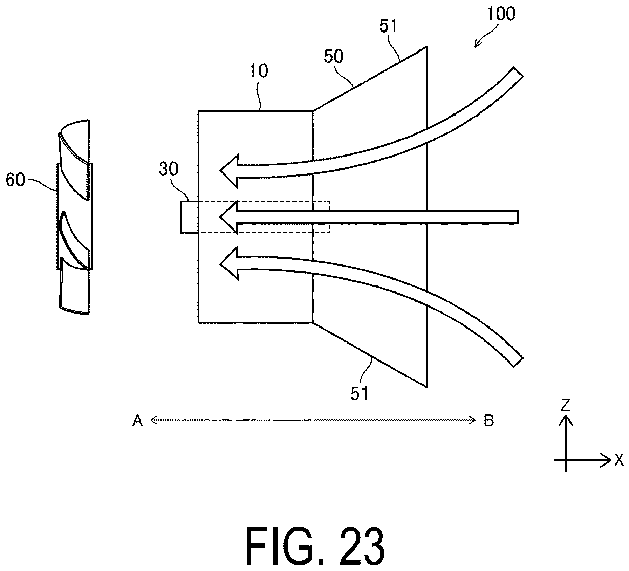

Further, as illustrated in FIG. 23, the sensible heat unit 50 may have a tapered portion 51 on the one side A or the other side B of the heat exchange element 10. When the first fan 60 is provided on the one side A of the heat exchange element 10, the sensible heat unit 50 having the tapered portion 51 is preferably provided on the other side B of the heat exchange element 10. By having the tapered portion 51, the amount of air of the heat exchange element 10 on the outside can be further increased, and the variation in the amount of air in the heat exchange element 10 can be further reduced.

Modified examples of the heat exchange element 10 will be described in detail below.

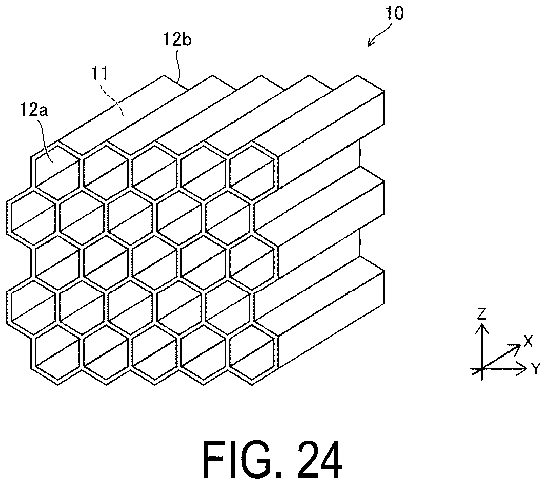

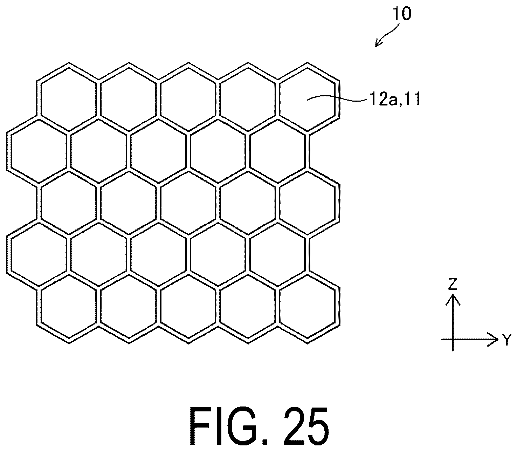

FIG. 24 is a perspective view illustrating a modified example of the heat exchange element 10. FIG. 25 is a front view illustrating the modified example of the heat exchange element 10. As illustrated in FIGS. 24 and 25, the heat exchange element 10 may have a honeycomb shape.

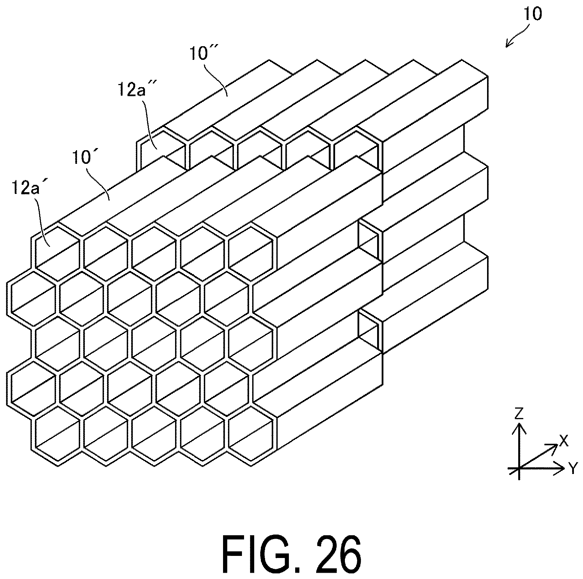

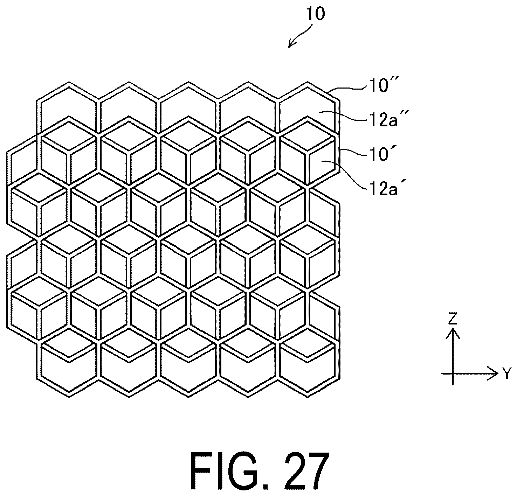

FIG. 26 is a perspective view illustrating another modified example of the heat exchange element 10. FIG. 27 is a front view illustrating the other modified example of the heat exchange element 10. As illustrated in FIGS. 26 and 27, two heat exchange elements 10' and 10" may be used and stacked in the X direction. Further, as illustrated in FIG. 27, the positions of the heat exchange elements 10' and 10" in the X direction may be offset from each other in the Z direction or the Y direction. As illustrated in FIG. 27, in the heat exchange elements 10' and 10" offset from each other, an opening 12'a of the heat exchange element 10' placed in the front is offset from an opening 12"a of the heat exchange element 10" placed in the rear.

As described above, the total heat exchanger 100 according to the disclosure has a humidity control function and can reduce thermal resistance to enable efficient heat exchange.

### Ventilation Device

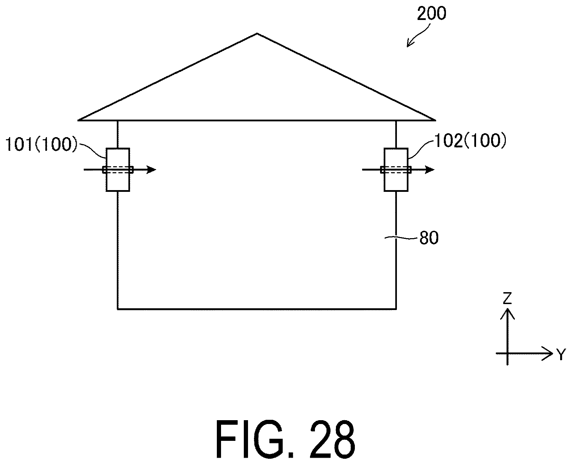

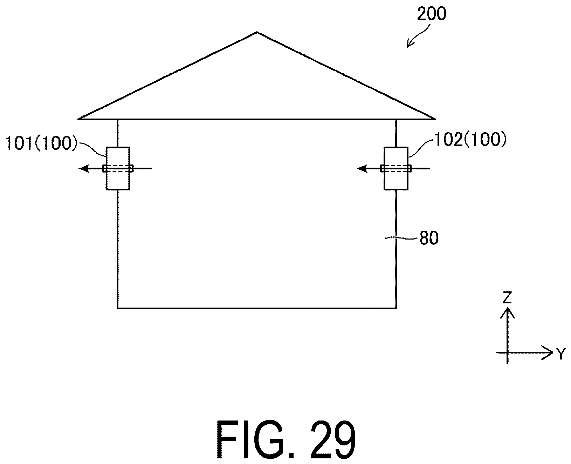

Next, a ventilation device 200 according to the disclosure will be described. FIGS. 28 and 29 are side views schematically illustrating the ventilation device 200 according to the disclosure. As illustrated in FIGS. 28 and 29, the ventilation device 200 according to the disclosure includes the total heat exchangers 100 and a space 80 in which the total heat exchangers 100 are provided. The configuration and the like of the total heat exchanger 100 are as described above.

The ventilation device 200 may include multiple total heat exchangers 100. Assuming that the total heat exchangers 100 are at least a first total heat exchanger 101 and a second total heat exchanger 102, as illustrated in FIG. 28, when the first total heat exchanger 101 supplies air to the space 80, the second total heat exchanger 102 exhausts air from the space 80. After a predetermined time has elapsed, for example, after several tens of seconds have elapsed, as illustrated in FIG. 29, the first total heat exchanger 101 exhausts air from the space 80 and the second total heat exchanger 102 supplies air to the space 80. Then, air supply and air exhaust from the first total heat exchanger 101 and the second total heat exchanger 102 are switched at a predetermined time period. Thus, the ventilation device 200 according to the disclosure can be a time-sharing system that switches air supply and air exhaust after a predetermined time has elapsed. **In** this way, the space 80 can be ventilated while more efficiently exchanging heat.

The space 80 may be, for example, a room or interior of a car, train, or the like. The ventilation device 200 according to the disclosure can therefore be for residential or vehicle use. Further, the ventilation device 200 is not limited to residential or vehicle use, but can be configured by installing the total heat exchangers 100 at boundaries separating a space.

As described above, the ventilation device 200 according to the disclosure has a humidity control function and can reduce thermal resistance to enable efficient heat exchange.

Note that, the embodiments and the examples of the disclosure have been described in detail above, but it will be readily apparent to those skilled in the art that many modifications are possible without substantially departing from the novel matters and effects of the disclosure. Therefore, all such modifications are intended to be included within the scope of the disclosure.

For example, a term described at least once in the specification or drawings together with a different term having a broader or similar meaning may be replaced by that different term anywhere in the specification or drawings. Further, the configurations and operations of the total heat exchanger and the ventilation device are not limited to those described in the embodiments and examples of the disclosure, and various modifications are possible.

## Claims

1. A total heat exchanger comprising:
a heat exchange element having a three-dimensional shape;
a humidity control material provided on the heat exchange element; and
a heat storage unit having a cylindrical shape configured to communicate one side and another side of the heat exchange element in an air flow direction.

2. The total heat exchanger according to claim 1, further comprising:
heat recovery units configured to recover heat on the one side and the other side of the heat exchange element.

3. The total heat exchanger according to claim 1,
wherein the heat exchange element is a block type.

4. The total heat exchanger according to claim 1,
wherein the heat exchange element is cylindrical.

5. The total heat exchanger according to claim 1,
wherein the heat storage unit is provided at the center of the heat exchange element in the air flow direction.

6. The total heat exchanger according to claim 1, further comprising:
a sensible heat unit on the one side or the other side of the heat exchange element.

7. The total heat exchanger according to claim 1,
wherein the heat exchange element includes thick liner sections provided circumferentially at predetermined distances around an axis of the heat exchange element.

8. The total heat exchanger according to claim 1,
wherein the heat exchange element includes a partition plate extending outward from around an axis of the heat exchange element.

9. The total heat exchanger according to claim 1, further comprising:
a first fan provided on the one side or the other side of the heat exchange element configured to send air to the heat exchange element and the heat storage unit.

10. The total heat exchanger according to claim 1, further comprising:
a first fan configured to send air to the heat exchange element and the heat storage unit on the one side or the other side of the heat exchange element; and
a second fan configured to send air to the heat exchange element and the heat storage unit on the one side or the other side of the heat exchange element,
wherein the first fan is provided on the one side of the heat exchange element, and the second fan is provided on the other side of the heat storage unit.

11. The total heat exchanger according to claim 1, further comprising:
a first fan configured to send air to the heat exchange element on the one side or the other side of the heat exchange element; and
a sensible heat unit having a tapered portion on the one side or the other side of the heat exchange element.

12. The total heat exchanger according to claim 1,
wherein the heat storage unit includes gelled water and a highly thermally conductive random packing, or gelled water and a highly thermally conductive random packing.

13. The total heat exchanger according to claim 1,
wherein the heat storage unit includes convection-controlled water.

14. The total heat exchanger according to claim 1,
wherein the heat storage unit includes a water-filled aluminum container, the water-filled aluminum container further including a corrosion-resistant aluminum member.

15. A ventilation device comprising:
the total heat exchanger according to any one of claims 1 to 14; and
a space provided with the total heat exchanger.

16. The ventilation device according to claim 15,
wherein the ventilation device is for residential or vehicle use.
